# EUROPEAN PATENT APPLICATION

(11) **EP 3 406 419 A1**
(43) Date of publication of application: **28.11.2018**
(21) Application number: 18171034.4
(22) Date of filing: 07.05.2018
(51) Int. Cl.: B29C 49/42, B29C 49/06, B29K 67/00, B29L 31/00

(54) **LINEAR STRETCH-BLOW MOULDING MACHINE FOR THE PRODUCTION OF CONTAINERS MADE OF PLASTIC MATERIAL**

(30) Priority: 22.05.2017 IT 201700055174
(71) Applicant: Lanfranchi S.r.l., 43044 Collecchio (Parma) (IT)
(72) Inventor: DE NARDI, Ireneo, 43044 Collecchio (IT); COMPER, Lucia, 43044 Collecchio (IT)
(74) Representative: Giugni, Valter

(57) **Abstract**

Linear stretch-blow moulding machine for the production of plastic containers, such as bottles, comprising substantially: a section for loading the so-called "preforms" (12); a section for heating the preforms in a heating unit, in which a chain conveyor (10) carries the preforms; and a bottle moulding section.

The chain conveyor (10) is used to move the preforms (12) from the loading section to the heating unit, and subsequently a variable pitch adapter (16) provided with grippers (24) collects the preforms from the chain conveyor and transfers them to a fixed-pitch conveyor (26) which carries them inside the press mould.

Each gripper (24) of the variable pitch adapter (16) is associated to a linear motor (22) suitable to be controlled independently and selectively to make it possible to vary the pitch of the preforms (12) based on the different dimensions of the bottles to be made.

## Description

### TECHNICAL FIELD OF THE INVENTION

. The present invention relates to a machine for the production of containers made of plastic material, such as PET bottles (polyethylene terephthalate) for beverages, using a stretch-blow moulding method. In particular, the present invention is related to a device for transferring the preforms to a linear stretch-blow machine. The invention is also related to the relative method for the production of said containers.

### PRIOR ART TECHNIQUE

. In the prior art technique different types of machines for the production of containers by means of blow-stretching are well known.

. Substantially, these machines comprise: a section for loading the so-called "preforms"; a unit for heating the preforms, in which there is mounted a chain conveyor for carrying the preforms; a section for moulding the bottles. Such section consists in a press with one or more moulds, each of which is formed by two shell halves staggered to each other between an opened position for loading the preforms and a closed position for moulding the containers. The opening/closing of the moulds is controlled, for example, by means of motor driven cams, knee-joint levers or mechanical actuators.

. The moulding of the containers is carried out in the mould by means of a mechanical stretch action and insufflating compressed air up to 40 bars.

. The feed of the preforms is carried out by means of a chain conveyor which moves along a rectilinear path, receiving the preforms from the loading section and carrying them to the heating unit.

. Subsequently, the preforms are transferred inside the press mould and wherefrom they are extracted after the moulding of the bottles by means of a ram provided with grippers which engage the resulting bottle necks.

### TECHNICAL PROBLEM TO BE SOLVED

. The present invention relates to linear stretch-blow moulding machines for the production of plastic containers, such as PET (polyethylene terephthalate) bottles for beverages. In particular, it is relative to the device for transferring the preforms from the heating unit to the moulding mould.

. Normally, the chain conveyor of the preforms to the heating unit has a fixed-pitch. The preforms are kept parallel and side by side with the minimum distance compatible with the size of the same preforms, so as to ensure the maximum efficiency (minimum heat loss) during the heating step of the preforms. This solution needs the use, between the chain conveyor in the heating unit and the conveyor in the press, of an adapter or regulator of the pitch or of the distance between the preforms. This results in a greater constructive complication and higher cost.

. In fact, there are also known variable pitch stretch-blow machines, which use telescopic mechanical systems or drum cams or variable-pitch screws to control the progress of the preforms. This mechanical solution shows limits regarding its practicality and rigidity constraints for the machine since it is necessary to change the cams when bottles of different dimensions must be manufactured.

. Furthermore, with time such mechanical solution is, by its nature, subject to wear and tear, and therefore it cannot ensure the precision continuity of its performance.

### SUMMARY OF THE INVENTION

. The object of the invention is achieved by means of a linear stretch-blow machine in which the variable pitch actuator device of the preforms is realized using grippers, each of which is provided with the relative linear motor, as defined in claim 1 of the present patent.

. With the solution according to the present invention, it is achieved the maximum flexibility of the device when controlling the transfer position (pitch) of the preforms, as it is possible to selectively activate/deactivate each linear motor in order to vary the pitch of the chain conveyor of the preforms. Furthermore, it is possible to make the heating system of the preforms more compact thus reducing the distance between the same preforms on the chain conveyor, and it is eliminated any limitation regarding the number of bottles that can be made based on their dimensions.

. Further advantages and characteristics of the present invention are described in detail in the subsequent dependent claims.

. Characteristics and advantages of the invention will be apparent from the following description, for exemplification only but not limited to, with reference to the appended figures, wherein:
- Figure 1 shows, in a schematic front view, a variable pitch adapter device for transferring the preforms from the heating unit to the press mould, according to the invention, in a first operating condition;
- Figure 2 shows, in a schematic front view, the adapter device of Figure 1 in a second operating condition;
- Figure 3 shows, in a schematic front view, the device of Figure 1 in a third operating condition;
- Figure 4 shows, in a prospective view, the adapter device in the operating condition of Figure 3;
- Figure 5 shows, in a plan view, the adapter device in the operating condition of Figure 3;
- Figure 6A shows a particular of the adapter device according to the section A-A of Figure 1;
- Figure 6B shows a particular of the adapter device according to the section B-B of figure 2; and
- Figure 6C shows a particular of the adapter device according to the section C-C of figure 3 and Figure 5.

### DETAILED DESCRIPTION OF THE INVENTION

. The invention is related to a stretch-blow machine for the production of plastic containers such as bottles, comprising a variable pitch adapter device for transferring the preforms from the heating unit to the press mould.

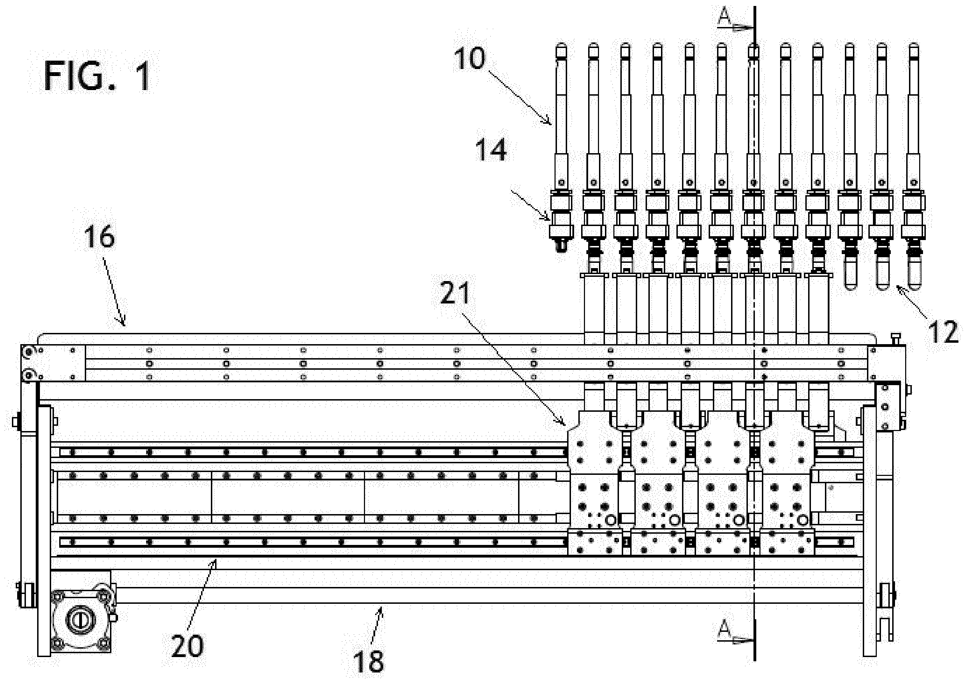

. With reference to figure 1, there is schematically shown in a front elevation view, a chain conveyor 10 that transfers the preforms 12 from the heating unit (not shown) to the press mould (not shown). In the figure it can be seen a series of preforms 12 which are aligned and engaged to the respective supports 14 of the chain conveyor 10.

. The pitch of the supports 14, and hence of the preforms 12, on the chain conveyor 10 is fixed and it is the minimum allowed in relation with the dimension (diameter) of the preforms, so as to make the machine the most compact possible.

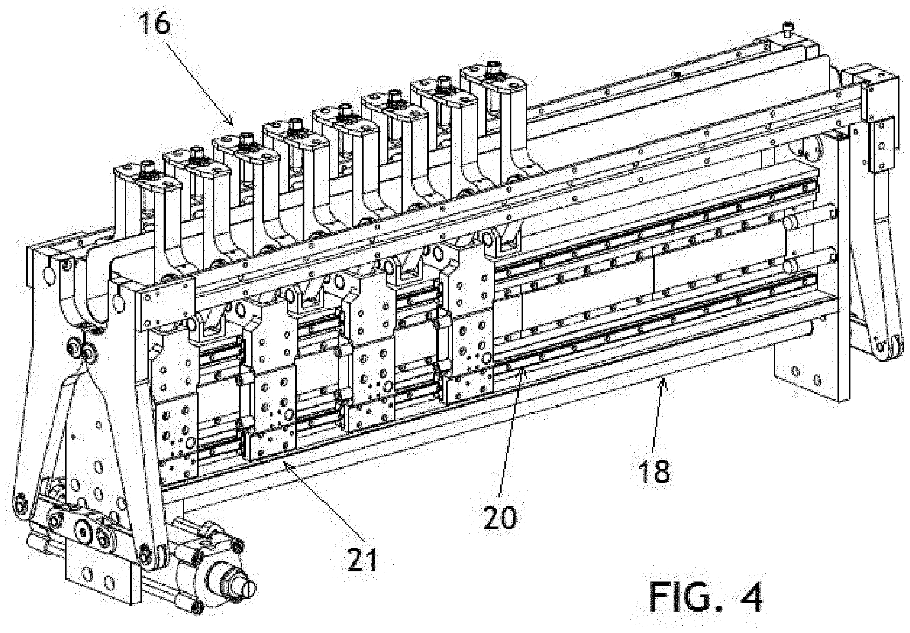

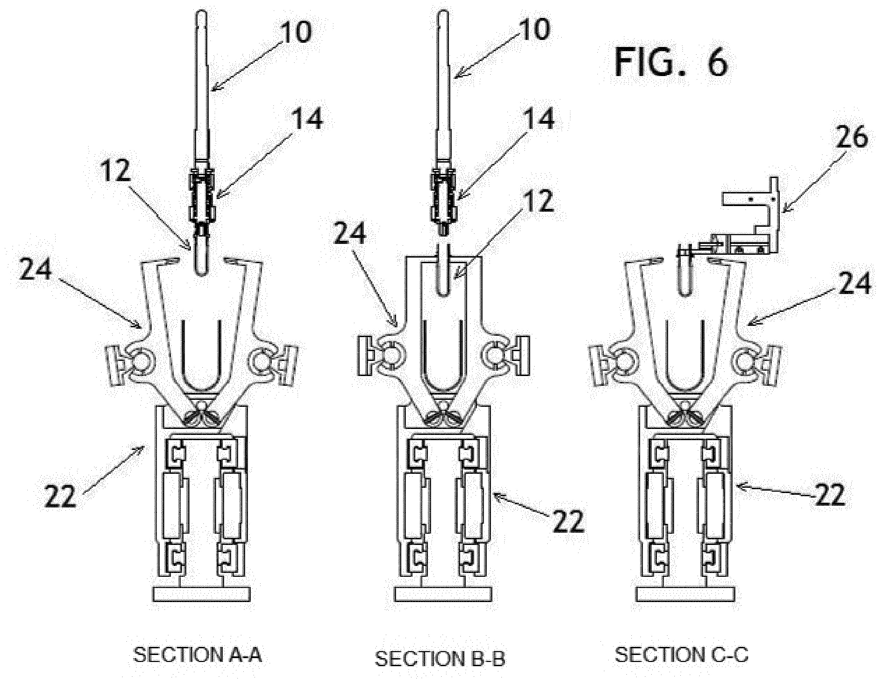

. In Figure 1, furthermore, there is shown the variable pitch adapter device 16 according to the invention, which is placed partially underneath the chain conveyor 10 of the preforms 12. The adapter device 16 is supported by a supporting structure 18, which is provided with guide rails 20 whereon is mounted a plurality of sliding carriages 21 which carry a respective linear motor 22 (Figures 4 and 6A-C).

. Each linear motor 22 is associated to a gripper 24 (Figure 6A-C), extending upward and it is suitable to collect a corresponding preform 12, engaging it on the respective support 14 of the chain conveyor 10.

. According to the invention, the linear motors 22 are independently and selectively controlled by means of a centralized control program of the stretch-blow machine.

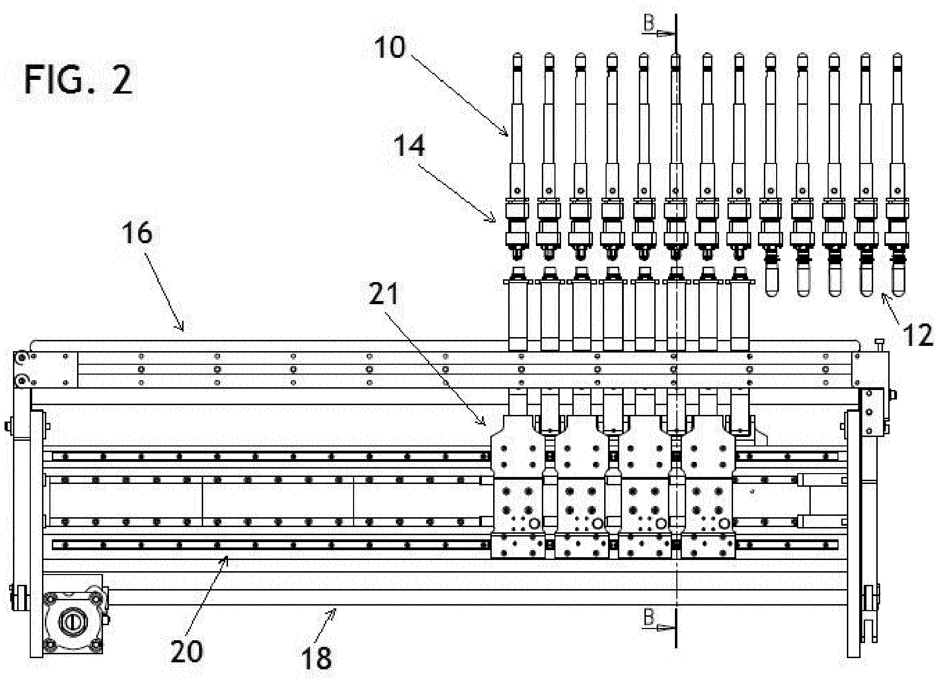

. Figure 2 shows the adapter device 16 in a second operating position, wherein a prearranged group of motor driven grippers 24 have detached the respective preforms 12 from the chain conveyor 10 and arrange themselves for the pitch variation of the same preforms.

. In Figure 2 the number of the selected preforms in the group is eight, but it is clear that the preforms can be of a different number, based on the required productive capacity of the stretch-blow machine and, consequently, dimensions of the same machine are increased.

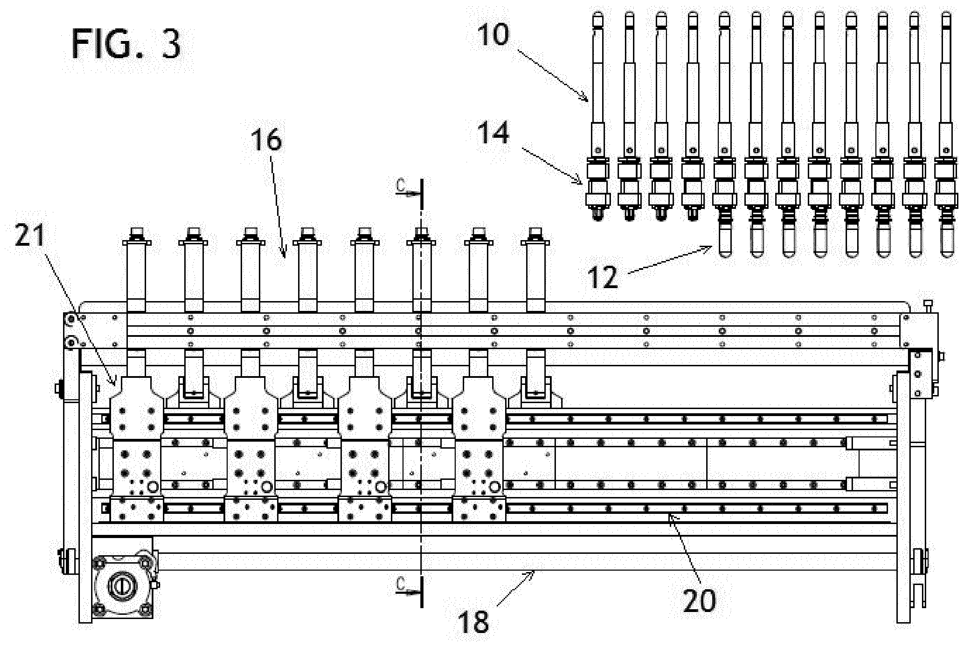

. Figure 3 shows the adapter device 16 in a third operating position, wherein the pitch change between the preforms 12 is realized by means of the control program of the stretch-blow machine. The adapter 16 determines the pitch of the preforms 12, that is the distance between two adjacent preforms, based on the dimension (diameter) of the bottles to be made, and of the relative dimension of the press mould.

. According to a further characterizing particular of the invention, the carriages 21 that support the linear motor 22 of the adapter device 16 run on two guide rails 20 separate and parallel to each other. Thus, the carriages 21 can be arranged alternately staggered opposite to each other, so as to reproduce the chain pitch when collecting the preforms and subsequently reproduce the blowing pitch. This also allows to achieve the maximum compactness of the adapter 16 based on the pitch of the preforms 12.

. Figure 4 shows a perspective view of the adapter device 16, and it allows to better see the arrangement of the carriages 21 on the guide rails 20, as previously described.

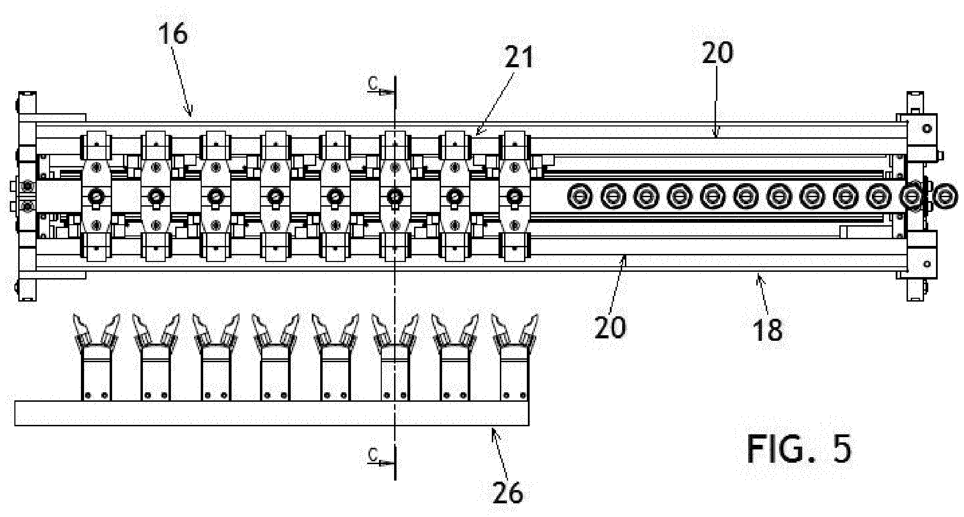

. In Figure 5 there is shown, in a plan view, the variable pitch adapter device 16 of the invention, as well as a conveyor device 26 which collects the preforms 12 from the adapter 16 and transfers them inside the stretch-blow press where the containers to be made are formed.

. Figure 6A shows, correspondingly to section A-A of Figure 1, a particular of the adapter device 16 wherein it can be seen a gripper 24, associated to the relative linear motor 22, which is in the opened position ready to collect a preform 12 from the relative support of the chain conveyor 10.

. Figure 6B shows, correspondingly to section B-B of Figure 2, a particular of the adapter device 16 wherein it can be seen a gripper 24, associated to the relative linear motor 22, that has collected a preform 12 detaching it from the relative support of the chain conveyor 10.

. Figure 6C shows, correspondingly to section C-C of Figure 3 and of figure 5, a particular of the adapter device 16 wherein it can be seen a gripper 24 associated to the respective linear motor 22, which is in an opened position so as to make it possible for the conveyor 26 to collect the preform 12 to be transferred in the stretch-blow press.

. In conclusion, the device according to the invention solves the technical problem of realizing a variable pitch stretch-blow machine for the production of plastic containers of different dimensions which is free from the limitations of practicality and rigidity due to the use of mechanically controlled adapters.

. Of course, the solution proposed and described for exemplification only can be modified without departing from the intended scope of protection as defined in the claims.

## Claims

1. Linear stretch-blow moulding machine for the production of plastic containers, such as bottles, comprising substantially:
- a section for loading the so-called "preforms" (12);
- a section for heating the preforms in a heating unit, in which a chain conveyor (10) carries the preforms, and
- a bottle moulding section, comprising at least one press mould,
wherein the chain conveyor (10) is used to move the preforms (12) from the loading section to the heating unit, and subsequently a variable pitch adapter (16) provided with grippers (24) collects the preforms from the chain conveyor and transfers them to a fixed-pitch conveyor (26) which carries them inside the press mould;
machine **characterized in that** each of the grippers (24) of the variable pitch adapter (16) are associated to a linear motor (22) suitable to be controlled independently and selectively to make it possible to vary the pitch of the preforms (12) based on the different dimensions of the bottles to be made.

2. Stretch-blow moulding machine as in claim 1, wherein the linear motors (22) are mounted on carriages (21) arranged alternately staggered opposite to each other, suitable to run on two separate guide rails (20) parallel to each other.

3. Stretch-blow moulding method for the production of plastic containers, such as bottles, comprising substantially:
- a step for loading the so-called "preforms" (12);
- a step for heating the preforms, and
- a step for moulding the bottles, inside the mould of a press,
wherein the transfer of the preforms (12) from the loading step to the heating step is carried out with a chain conveyor (10), and the insertion of the preforms inside the press mould is performed by a variable-pitch adapter (12) and a fixed-pitch conveyor (26),
method **characterized in that** the step of varying the pitch of the preforms (12) is carried out by independent and selective controls, being each of the grippers (24) that collect the individual preforms actuated by its relative linear motor (22).

4. Stretch-blow moulding method for the production of plastic containers according to claim 3, wherein the step of changing the distance between the preforms (12) is carried out by running carriages (21), each provided with a linear motor (22), on guide rails (20) arranged parallel and side by side to each other, the carriages (21) being mounted opposite each other on the guide rails (20) in an alternating and staggered position.
